# EUROPÄISCHE PATENTSCHRIFT

(11) **EP 3 609 687 B1**
(45) Veröffentlichungstag und Bekanntmachung des Hinweises auf die Patenterteilung: **08.05.2024**
(21) Anmeldenummer: 18718742.2
(22) Anmeldetag: 06.04.2018
(51) Int. Cl.: B29C 65/08, B06B 3/02

(54) **VERFAHREN ZUM INTERMITTIERENDEN ULTRASCHALLBEARBEITEN EINER MATERIALBAHN**
METHOD FOR INTERMITTENT ULTRASONIC PROCESSING OF A LENGTH OF MATERIAL
PROCÉDÉ POUR L'USINAGE INTERMITTENT PAR ULTRASONS D'UNE BANDE DE MATÉRIAU

(30) Priorität: 10.04.2017 DE 102017107617
(43) Veröffentlichungstag der Anmeldung: 19.02.2020
(73) Patentinhaber: Herrmann Ultraschalltechnik GmbH & Co. KG, 76307 Karlsbad (DE)
(72) Erfinder: GNAD, Gerhard, 75210 Keltern (DE); EWALD, Bastian, 76337 Waldbronn (DE); GEIGER, Armin, 76275 Ettlingen (DE)
(74) Vertreter: WSL Patentanwälte Partnerschaft mbB
(86) Internationale Anmeldenummer: PCT/EP2018/058937
(87) Internationale Veröffentlichungsnummer: WO 2018/189057

(56) Entgegenhaltungen:
- EP-A1- 3 092 995
- EP-A2- 2 522 492
- US-A- 4 313 778

## Beschreibung

Die vorliegende Erfindung betrifft ein Verfahren zum intermittierenden Ultraschallbearbeiten einer Materialbahn, bei dem eine Materialbahn mit einer Bahngeschwindigkeit zwischen einer Sonotrode und einem Gegenwerkzeug hindurchbewegt wird und die Materialbahn intermittierend bearbeitet wird. Solche Verfahren und entsprechende Vorrichtungen sind bekannt. So wird beispielsweise in der DE 603 19 101 T2 eine Vorrichtung beschrieben, bei der eine Materialbahn zwischen einer Sonotrode und einem Gegenwerkzeug hindurchbewegt wird und die Sonotrode während der Bearbeitung mit einer Schweißkraft auf die Materialbahn gedrückt wird. Immer dann, wenn keine Bearbeitung erfolgen soll, wird die Sonotrode von der Materialbahn wegbewegt.

Die entsprechende mechanische Bewegung erfolgt bei den bekannten Vorrichtungen entweder mit Hilfe einer CAM-Steuerung oder mittels einer Nockensteuerung. Wird eine rotierende Sonotrode oder ein rotierendes Gegenwerkzeug verwendet, so können alternativ offene Kammern in der Siegelfläche von Sonotrode oder Gegenwerkzeug vorgesehen sein, die eine Ultraschallbearbeitung unterbrechen, wenn die Materialbahn gegenüber einer Kammer angeordnet ist.

Das regelmäßige Hin- und wegbewegen der Sonotrode führt jedoch, insbesondere bei sehr hohen Bahngeschwindigkeiten, zu Problemen bei der Materialbahnführung. Zudem lassen sich hohe Bahngeschwindigkeiten nicht verwirklichen, da die Sonotrode nicht schnell genug hin- und herbewegt werden kann.

Die erwähnte Nockensteuerung hat zudem den Nachteil, dass eine Veränderung des Bearbeitungszyklus einen Austausch der Nockensteuerung notwendig macht, wodurch ein nicht gewünschter Maschinenstillstand notwendig ist. Gleiches gilt für die Verwendung von rotierenden Werkzeugen mit Kammern, da die Werkzeuge gegen Werkzeuge mit entsprechend angepassten Kammerdimensionen verwendet werden müssen.

In der US 4,313,778 A werden beispielsweise ein Ultraschallnahtverfahren und eine Vorrichtung zum kontinuierlichen Verbinden von thermoplastischem Material offenbart. Ein beweglicher Amboss ist gegenüber dem Ausgangsende eines Horns angeordnet, um einen Spalt bereitzustellen, durch den das thermoplastische Material gefördert wird. Der Amboss wird zyklisch von der Hornfläche wegbewegt und unmittelbar danach unter leicht einstellbarem Druck gegen die Unterseite des Materials gedrückt und dann für eine vorbestimmte Zeitdauer oder eine Menge Materialzufuhr in Position geklemmt.

Aus der EP 2 522 492 A2 ist darüber eine Form-Füll-Dichtungsmaschine mit einem Pulldown-Riemenmechanismus, einem vertikalen Dichtungsmechanismus und einer Steuerung bekannt. Der Pulldown-Riemenmechanismus befördert einen zylindrischen Film. Der vertikale Dichtungsmechanismus übt Druck und Ultraschallschwingung auf den zylindrischen Film aus und dichtet den zylindrischen Film ab. Die Steuerung steuert den Pulldown-Riemenmechanismus, den Druck und die Amplitude der Ultraschallschwingung, die durch den vertikalen Dichtungsmechanismus auf den zylindrischen Film ausgeübt wird, wobei die Steuerung Druck und Ultraschallschwingung auf den zylindrischen Film unmittelbar vor Erreichen eines ersten Zeitpunkts ausübt, zu dem die Beförderung des zylindrischen Films beginnt. Die Steuerung ändert mindestens entweder den Druck oder die Amplitude der auf den Film ausgeübten Ultraschallschwingung entsprechend der Geschwindigkeit des Films in einem Zeitraum nach Erreichen des ersten Zeitpunkts.

Vor dem Hintergrund des beschriebenen Standes der Technik ist es daher Aufgabe der vorliegenden Erfindung, ein Verfahren zum intermittierenden Ultraschallbearbeiten einer Materialbahn anzugeben, mit dem die Nachteile des Standes der Technik vermieden oder zumindest verringert werden können.

Erfindungsgemäß wird diese Aufgabe dadurch gelöst, dass in einem Bearbeitungsintervall die Sonotrode mit einer Ultraschallschwingung mit einer Schwingungsamplitude A angeregt wird und in einem Bewegungsintervall die Sonotrode mit einer Schwingungsamplitude B angeregt wird, wobei die Schwingungsamplitude A größer als die Schwingungsamplitude B ist und die Materialbahn während des Bearbeitungsintervalls und während des Bewegungsintervalls sowohl Sonotrode als auch Gegenwerkzeug berührt, wobei die Sonotrode als Rotationssonotrode mit zylindrischer Siegelfläche ausgebildet ist, wobei das Gegenwerkzeug als Walzenwerkzeug mit zylindrischer Siegelfläche ausgebildet ist, wobei die Sonotrode und das Gegenwerkzeug sowohl während des Bearbeitungsintervalls als auch während des Bewegungsintervalls um eine Rotationsachse gedreht werden, wobei die Umfangsgeschwindigkeit der Sonotrode und des Gegenwerkzeuges in etwa der Bahngeschwindigkeit des zu bearbeitenden Materials entspricht..

Erfindungsgemäß wird daher die Sonotrode nicht mehr von der Materialbahn wegbewegt, sondern lediglich die Schwingungsamplitude dann, wenn keine Bearbeitung erfolgen soll, reduziert.

Im einfachsten Fall kann der Generator, der den Konverter zur Erzeugung der Ultraschallschwingung mit der geeigneten elektrischen Wechselspannung versorgt, während des Bewegungsintervalls abgeschaltet werden.

Es hat sich jedoch gezeigt, dass ein vollständiges Abschalten der Sonotrode dazu führt, dass beim Wiederanschalten, das heißt zu Beginn des nächsten Bearbeitungsintervalls, die Zeitdauer, bis zu der sich die Sonotrode wieder im gewünschten eingeschwungenen Zustand befindet, vergleichsweise lang ist, sodass insbesondere bei hohen Bahngeschwindigkeiten der Bereich, in dem noch keine optimale Bearbeitung der Materialbahn erzielt wird, zu lang ist.

In einer bevorzugten Ausführungsform ist daher vorgesehen, dass die Schwingungsamplitude B, das heißt die Schwingungsamplitude der Sonotrode, im Bewegungsintervall größer als 0 ist. Somit wird die Schwingungsamplitude der Ultraschallschwingung reduziert, diese jedoch nicht abgeschaltet.

Dabei hat sich für die Schwingungsamplitude B während des Bewegungsintervalls eine Größe zwischen 1 0% und 30% der Schwingungsamplitude A während des Bearbeitungsintervalls als vorteilhaft erwiesen. In der Regel ist die Schwingungsamplitude A so bemessen, dass eine optimale Ultraschallbearbeitung erfolgen kann. Eine noch höhere Schwingungsamplitude führt dann zu einer Beschädigung der Materialbahn und/oder einem erhöhtem Verschleiß von Sonotrode oder Gegenwerkzeug. Eine geringere Schwingungsamplitude ermöglicht dann keine zuverlässige Bearbeitung mehr. Die Schwingungsamplitude B sollte daher gegenüber der Schwingungsamplitude A möglichst soweit reduziert werden, dass keinerlei Bearbeitung der Materialbahn mehr erfolgt.

Erfindungsgemäß wird als Sonotrode eine Rotationssonotrode mit zylindrischer Siegelfläche verwendet, wobei die Sonotrode sowohl während des Bearbeitungsintervalls als auch während des Bewegungsintervalls um die Rotationsachse gedreht wird. In Kombination wird das Gegenwerkzeug als Walzengegenwerkzeug mit zylindrischer Siegelfläche verwendet, wobei das Gegenwerkzeug sowohl während des Bearbeitungsintervalls als auch während des Bewegungsintervalls um eine Rotationsachse gedreht wird

Die Bahn läuft somit auf der zylindrischen Siegelfläche ab. Daher entspricht die Umfangsgeschwindigkeit der Rotationssonotrode und des Gegenwerkzeuges in etwa der Bahngeschwindigkeit der zu bearbeitenden Materialbahn.

In einer weiteren bevorzugten Ausführungsform wird der Drehwinkel der Rotationssonotrode oder des Walzengegenwerkzeuges erfasst und Beginn und Ende von Bearbeitungsintervall und/oder Bewegungsintervall in Abhängigkeit von dem erfassten Drehwinkel bestimmt.

Durch diese Maßnahme lässt sich die Materialbahn nahezu beliebig bearbeiten. Soll beispielsweise ein Bahnabschnitt mit einer definierten Länge bearbeitet werden, während der vorherige und nachherige Bahnabschnitt nicht bearbeitet werden soll, so wird zu Beginn des Bearbeitungsintervalls die Winkelposition der Rotationssonotrode erfasst und während der Bearbeitung die Veränderung der Winkelposition detektiert. Der so ermittelte Drehwinkel kann durch 360° geteilt und mit 2 * π * r (r = Radius der zylindrischen Siegelfläche) multipliziert werden, um die bearbeitete Materialbahnstrecke zu bestimmen. Sobald die gewünschte Strecke erreicht ist, kann in das Bewegungsintervall umgeschaltet werden.

In einer weiteren bevorzugten Ausführungsform ist vorgesehen, dass Sonotrode oder Gegenwerkzeug während eines Schweißintervalls mit einer vorbestimmten Kraft F_{A} auf die Materialbahn gedrückt wird. Es hat sich gezeigt, dass das Schweißergebnis verbessert wird, wenn eine konstante Kraft während der Bearbeitung auf die Materialbahn aufgebracht wird.

Es kann von Vorteil sein, wenn Sonotrode oder Gegenwerkzeug während eines Standby-Intervalls mit einer vorbestimmten Kraft F_{B} auf die Materialbahn gedrückt wird, wobei die Kraft F_{B} kleiner als die Kraft F_{A} ist.

Im Standby-Intervall wird daher die Kraft, mit der Sonotrode oder Gegenwerkzeug auf die Materialbahn gedrückt werden, gegenüber der Kraft, mit der Sonotrode oder Gegenwerkzeug während des Schweißintervalls auf die Materialbahn gedrückt wird, reduziert.

Das Bewegungsintervall ist somit das Intervall, indem die Sonotrode mit der Schwingungsamplitude B schwingt.

Das Bearbeitungsintervall ist das Intervall, indem die Sonotrode mit einer Schwingungsamplitude A schwingt.

Das Standby-Intervall ist das Intervall, indem die Sonotrode oder das Gegenwerkzeug mit einer Kraft F_{B} auf die Materialbahn gedrückt wird.

Das Schweißintervall ist das Interall, indem die Sonotrode oder das Gegenwerkzeug mit einer Kraft F_{A} auf die Materialbahn gedrückt wird.

Grundsätzlich ist es möglich, dass das Schweißintervall mit dem Bearbeitungsintervall und das Standby-Intervall mit dem Bewegungsintervall übereinstimmen.

Es hat sich jedoch gezeigt, dass das Schweißintervall am besten kürzer als das Bearbeitungsintervall ist. Das Schweißintervall liegt vorzugsweise innerhalb des Bearbeitungsintervalls, wobei das Bearbeitungsintervall vor dem Schweißintervall beginnt und vorzugsweise das Schweißintervall vor dem Bearbeitungsintervall endet.

Mit anderen Worten wird, wenn es zu einer Bearbeitung der Materialbahn kommen soll, zunächst die Schwingungsamplitude der Ultraschallschwingung erhöht und anschließend die Kraft, mit der die Sonotrode oder das Gegenwerkzeug auf die Materialbahn gedrückt wird, erhöht.

In einer weiteren bevorzugten Ausführungsform ist vorgesehen, dass zwischen dem Bewegungsintervall und dem Bearbeitungsintervall ein Rampenintervall vorgesehen ist, in welchem die Schwingungsamplitude der Ultraschallschwingung der Sonotrode von der Schwingungsamplitude B auf die Schwingungsamplitude A kontinuierlich oder in mehreren Stufen erhöht wird. Es hat sich nämlich gezeigt, dass es nicht immer möglich ist, die Schwingungsamplitude abrupt zu erhöhen, ohne dass es zu einem Überschwingeffekt kommt. Da die Schwingungsamplitude von dem Generator erzeugt wird, der entsprechend geregelt ist, kann diese abrupte Änderung der Schwingungsamplitude nur schwer verwirklicht werden, sodass sich die Schwingungsamplitude unter Umständen zu stark erhöht und es eine gewisse Zeit dauert, bis sich die gewünschte Schwingungsamplitude eingestellt hat.

Daher ist es von Vorteil, wenn die Schwingungsamplitude kontinuierlich oder in mehreren Stufen erhöht wird, um die Regelungsgenauigkeit der Schwingungsamplitude zu verbessern.

In einer weiteren bevorzugten Ausführungsform ist vorgesehen, dass die Materialbahn während des Bearbeitungsintervalls, des Bewegungsintervalls und des Rampenintervalls mit einer konstanten Bahngeschwindigkeit v zwischen Sonotrode und Gegenwerkzeug hindurchbewegt wird, wobei die Länge des Rampenintervalls so gewählt wird, dass während des Rampenintervalls zwischen 0,5 und 10 cm, vorzugsweise zwischen 1 und 5 cm der Materialbahn zwischen Sonotrode und Gegenwerkzeug hindurchbewegt werden.

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figuren.

Es zeigen:
- Figur 1: eine schematische Darstellung einer Vorrichtung zur Durchführung des Verfahrens und
- Figur 2: eine schematische Darstellung der Zeitabhängigkeit von Schwingungsamplitude und Kraft.

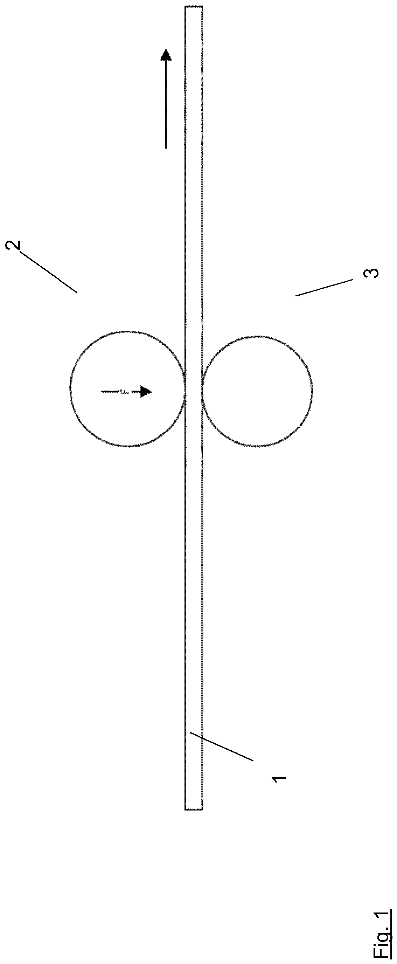

In Figur 1 ist eine schematisch Darstellung einer Vorrichtung zur Durchführung eines Verfahrens zum intermittierenden Ultraschallbearbeiten einer Materialbahn gezeigt. Die Materialbahn 1 wird in Pfeilrichtung zwischen einer Sonotrode 2 und einem Gegenwerkzeug 3 hindurchbewegt. Sowohl Sonotrode 2 als auch Gegenwerkzeug 3 sind in dieser Ausführungsform walzenförmig ausgebildet.

Die Sonotrode 2 wird mit einer Kraft F in Richtung auf das Gegenwerkzeug 3 gedrückt, sodass die Materialbahn 1 zwischen Sonotrode 2 und Gegenwerkzeug 3 zusammengedrückt wird.

Eine Bearbeitung der Materialbahn 1 erfolgt, wenn die Sonotrode 2 mit der geeigneten Schweißkraft F_{A} auf die Materialbahn gedrückt wird und die Sonotrode mit einer geeigneten Schwingungsamplitude A schwingt.

Es gibt jedoch Anwendungsfälle, in denen nicht die gesamte Materialbahn 1 bearbeitet werden soll, sondern nur abschnittsweise eine Bearbeitung notwendig ist.

Erfindungsgemäß wird daher die Schwingungsamplitude der Ultraschallschwingung der Sonotrode immer dann reduziert, wenn keine Bearbeitung erfolgen soll. Die Materialbahn wird zwar auch dann zwischen Sonotrode und Gegenwerkzeug hindurchgeführt, aufgrund der reduzierten Schwingungsamplitude der Ultraschallschwingung kommt es jedoch zu keiner Bearbeitung.

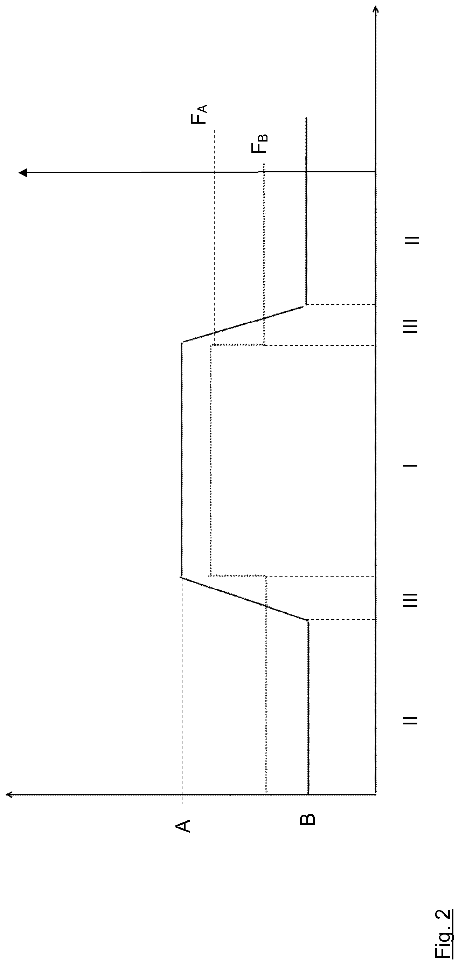

Dies ist schematisch in Figur 2 dargestellt. In dem Diagramm ist sowohl die Schwingungsamplitude (durchgezogene Linie) als auch die Schweißkraft (gepunktete Linie), mit der die Sonotrode in Richtung des Gegenwerkzeugs gedrückt wird, in willkürlichen Einheiten eingetragen. Man erkennt, dass in einem Intervall I die Schwingungsamplitude den Wert A und die Kraft, mit der die Sonotrode in Richtung Gegenwerkzeug bewegt wird, den Wert F_{A} annimmt. In dem Intervall I findet die eigentliche Bearbeitung statt. Daher entspricht Intervall I in diesem Beispiel sowohl dem Bearbeitungsintervall als auch dem Schweißintervall. Wie oben bereits ausgeführt wurde, müssen Bearbeitungsintervall uns Schweißintervall nicht unbedingt identisch sein.

Vor und nach dem Bearbeitungsintervall I ist während eines Bewegungsintervalls II sowohl die Schwingungsamplitude auf den Wert B als auch die Kraft, mit der die Sonotrode in Richtung Gegenwerkzeug gedrückt wird, auf den Wert F_{B} reduziert.

Während des Bewegungsintervalls II findet keine Bearbeitung statt. Zwischen dem Bewegungsintervall II und dem Bearbeitungsintervall I ist hier ein Rampenintervall III eingezeichnet, in dem die Schwingungsamplitude kontinuierlich erhöht beziehungsweise erniedrigt wird. Auch wenn in dem gezeigten Beispiel die Schwingungsamplitude im Rampenintervall linear verändert wird, sind auch nicht lineare Änderungen, wie z.b. eine gestufte Vergrößerung oder Verringerung der Schwingungsamplitude möglich.

Auch wenn in der Figur ein abrupter Kraftanstieg von der Kraft F_{B} auf die Kraft F_{A} und ein abrupter Kraftabfall von der Kraft F_{A} auf die Kraft F_{B} dargestellt ist, ist dies in der Regel nicht vollständig zu verwirklichen. In der Regel wird bei genauer Betrachtung auch die Kraftveränderung nicht abrupt, sondern allmählich erfolgen.

In der gezeigten Ausführungsform wird lediglich die Sonotrode 2 mit einer Ultraschallschwingung angeregt. Es ist alternativ aber auch möglich, als Gegenwerkzeug eine zweite Sonotrode zu verwenden, so dass die Materialbahn zwischen zwei Sonotroden hindurchgeführt wird. In diesem Fall sollte in dem Bewegungsintervall die Schwingungsamplitude der Ultraschallschwingung von zumindest einer der beiden Sonotroden reduziert werden, wobei am besten die Schwingungsamplituden von beiden Sonotroden reduziert werden.

### Bezugszeichenliste

- 1: Materialbahn
- 2: Sonotrode
- 3: Gegenwerkzeug
- A: Schwingungsamplitude
- F: Kraft
- F_{A}: Schweißkraft
- I: Bearbeitungsintervall
- II: Bewegungsintervall
- III: Rampenintervall

## Patentansprüche

1. Verfahren zum intermittierenden Ultraschallbearbeiten einer Materialbahn (1), bei dem eine Materialbahn (1) mit einer Bahngeschwindigkeit zwischen einer Sonotrode (2) und einem Gegenwerkzeug (3) hindurchbewegt wird und die Materialbahn (1) intermittierend bearbeitet wird, wobei in einem Bearbeitungsintervall (I) die Sonotrode (2) mit einer Ultraschallschwingung mit einer Schwingungsamplitude A angeregt wird und in einem Bewegungsintervall (II) die Sonotrode (2) mit einer Schwingungsamplitude B angeregt wird, **dadurch gekennzeichnet, dass** B<A ist und die Materialbahn (1) während des Bearbeitungsintervalls (I) und während des Bewegungsintervalls (II) sowohl Sonotrode (2) als auch Gegenwerkzeug (3) berührt, wobei die Sonotrode als Rotationssonotrode mit zylindrischer Siegelfläche ausgebildet ist, wobei das Gegenwerkzeug als Walzenwerkzeug mit zylindrischer Siegelfläche ausgebildet ist, wobei die Sonotrode und das Gegenwerkzeug sowohl während des Bearbeitungsintervalls als auch während des Bewegungsintervalls um eine Rotationsachse gedreht werden, wobei die Umfangsgeschwindigkeit der Sonotrode und des Gegenwerkzeuges in etwa der Bahngeschwindigkeit des zu bearbeitenden Materials entspricht.

2. Verfahren nach Anspruch 1, **dadurch gekennzeichnet, dass** die Schwingungsamplitude B >0 ist.

3. Verfahren nach Anspruch 2, **dadurch gekennzeichnet, dass** die Schwingungsamplitude B während des Bewegungsintervalls (II) zwischen 10% und 30% der Schwingungsamplitude A während des Bearbeitungsintervalls (I) beträgt.

4. Verfahren nach einem der Ansprüche 1 bis 3, **dadurch gekennzeichnet, dass** der Drehwinkel der Rotationssonotrode (2) erfasst wird und Beginn und Ende von Bearbeitungsintervall (I) und/oder Bewegungsintervall (II) in Abhängigkeit von dem erfassten Drehwinkel bestimmt wird.

5. Verfahren nach einem der Ansprüche 1 bis 4, **dadurch gekennzeichnet, dass** Sonotrode (2) oder Gegenwerkzeug (3) während eines Schweißintervalls mit einer vorbestimmten Kraft F_{A} auf die Materialbahn (1) gedrückt wird.

6. Verfahren nach Anspruch 5, **dadurch gekennzeichnet, dass** Sonotrode (2) oder Gegenwerkzeug (3) während eines Standbyintervalls mit einer vorbestimmten Kraft F_{B} auf die Materialbahn (1) gedrückt wird, wobei die Kraft F_{B} < F_{A} ist.

7. Verfahren nach Anspruch 5 oder 6, **dadurch gekennzeichnet, dass** das Schweißintervall kürzer als das Bearbeitungsintervall (I) ist.

8. Verfahren nach einem der Ansprüche 5 bis 7, **dadurch gekennzeichnet, dass** das Schweißintervall innerhalb des Bearbeitungsintervall (I) liegt, wobei das Bearbeitungsintervall (I) vor dem Schweißintervall beginnt und vorzugweise das Schweißintervall vor dem Bearbeitungsintervall (I) endet.

9. Verfahren nach einem der Ansprüche 1 bis 6, **dadurch gekennzeichnet, dass** zwischen dem Bewegungsintervall (II) und dem Bearbeitungsintervall (I) ein Rampenintervall (III) vorgesehen ist, in welchem die Schwingungsamplitude der Ultraschallschwingung der Sonotrode (2) von der Schwingungsamplitude B auf die Schwingungsamplitude A kontinuierlich oder in mehreren Stufen erhöht wird.

10. Verfahren nach Anspruch 9, **dadurch gekennzeichnet, dass** die Materialbahn (1) während des Bearbeitungsintervalls (I), des Bewegungsintervalls (II) und des Rampenintervalls (III) mit einer konstanten Bahngeschwindigkeit v zwischen Sonotrode (2) und Gegenwerkzeug (3) hindurchbewegt wird, wobei die Länge des Rampenintervalls (III) so gewählt wird, dass während des Rampenintervalls (III) zwischen 0,5 cm und 10 cm, vorzugsweise zwischen 1 und 5 cm der Materialbahn (1) zwischen Sonotrode (2) und Gegenwerkzeug (3) hindurchbewegt werden.

## Claims

1. Method for intermittent ultrasonic processing of a length of material (1), wherein a length of material (1) is moved through between a sonotrode (2) and a counter-tool (3) and the length of material (1) is processed intermittently, wherein in a processing interval (I) the sonotrode (2) is stimulated by an ultrasonic oscillation with an oscillation amplitude A and in a movement interval (II) the sonotrode is stimulated with an oscillation amplitude B, **characterised in that** B < A and during the processing interval (I) and during movement interval (II) the length of material (1) touches both the sonotrode (2) and also the counter-tool (3), wherein the sonotrode is designed as a rotary sonotrode with cylindrical sealing surface, wherein the sonotrode and the counter-tool are rotated around an axis of rotation both during the processing interval and also during the movement interval, wherein the circumferential speed of the sonotrode and the counter-tool approximately amounts to the speed of the length of the material to be processed.

2. Method according to claim 1, **characterised in that** the oscillation amplitude B > 0.

3. Method according to claim 2, **characterised in that** the oscillation amplitude B during the movement interval (II) amounts to between 10% and 30% of the oscillation amplitude A during the processing interval (I).

4. Method according to one of claims 1 to 3, **characterised in that** the angle of rotation of the rotary sonotrode (2) is detected and the beginning and end of the processing interval (I) and/or movement interval (II) is determined depending on the detected angle of rotation.

5. Method according to one of the claims 1 to 4, **characterised in that** the sonotrode (2) or counter-tool (3) is pressed onto the length of material (1) with a predetermined force F_{A} during a welding interval.

6. Method according to claim 5, **characterised in that** the sonotrode (2) or counter-tool (3) is pressed onto the length of material (1) with a predetermined force F_{B} during a standby interval, wherein the force F_{B} < F_{A}.

7. Method according to claim 5 or 6, **characterised in that** the welding interval is shorter than the processing interval (I).

8. Method according to one of the claims 5 to 7, **characterised in that** the welding interval lies within the processing interval (I), wherein the processing interval (I) begins before the welding interval and the welding interval preferably ends before the processing interval (I).

9. Method according to one of the claims 1 to 6, **characterised in that** a ramp interval (III) is provided between the movement interval (II) and the processing interval (I) in which the oscillation amplitude of the ultrasonic oscillation of the sonotrode (2) is increased from the oscillation amplitude B to the oscillation amplitude A, continuously or in several steps.

10. Method according to claim 9, **characterised in that,** during the processing interval (I), the movement interval (II) and the ramp interval (III) the length of material (1) is moved through between the sonotrode (2) and counter-tool (3) with a constant web velocity v, wherein the length of the ramp interval (III) is selected such that between 0.5 and 10 cm, preferably between 1 and 5 cm of the length of material (1) is moved through between the sonotrode (2) and counter-tool (3) during the ramp interval (III).

## Revendications

1. Procédé d'usinage intermittent par ultrasons d'une bande de matériau (1), lors duquel une bande de matériau (1) est déplacée à une vitesse de bande entre une sonotrode (2) et un contre-outil (3) et la bande de matériau (1) est usinée de manière intermittente, la sonotrode (2) étant excitée avec une oscillation ultrasonore ayant une amplitude d'oscillation A dans un intervalle d'usinage (1) et la sonotrode (2) étant excitée avec une amplitude d'oscillation B dans un intervalle de déplacement (II), **caractérisé en ce que** B<A et la bande de matériau (1) est en contact avec la sonotrode (2) et également avec le contre-outil (3) pendant l'intervalle d'usinage (I) et pendant l'intervalle de déplacement (II), la sonotrode étant réalisée sous la forme d'une sonotrode rotative ayant une surface de scellement cylindrique, l'outil homologue étant réalisé sous la forme d'un outil de laminage ayant une surface de scellement cylindrique, la sonotrode et le contre-outil étant amenés à tourner autour d'un axe de rotation pendant l'intervalle d'usinage et également pendant l'intervalle de déplacement, la vitesse circonférentielle de la sonotrode et du contre-outil correspondant à peu près à la vitesse de bande du matériau à usiner.

2. Procédé selon la revendication 1, **caractérisé en ce que** l'amplitude d'oscillation B est >0.

3. Procédé selon la revendication 2, **caractérisé en ce que** l'amplitude d'oscillation B pendant l'intervalle de déplacement (II) est comprise entre 10 % et 30 % de l'amplitude d'oscillation A pendant l'intervalle d'usinage (I).

4. Procédé selon l'une quelconque des revendications 1 à 3, **caractérisé en ce que** l'angle de rotation de la sonotrode rotative (2) est enregistré et le début et la fin de l'intervalle d'usinage (I) et/ou de l'intervalle de déplacement (II) sont déterminés en fonction de l'angle de rotation enregistré.

5. Procédé selon l'une quelconque des revendications 1 à 4, **caractérisé en ce que** la sonotrode (2) ou le contre-outil (3) est pressé sur la bande de matériau (1) avec une force prédéterminée F_{A} pendant un intervalle de soudage.

6. Procédé selon la revendication 5, **caractérisé en ce que** la sonotrode (2) ou le contre-outil (3) est pressé sur la bande de matériau (1) avec une force prédéterminée F_{B} pendant un intervalle d'attente, la force F_{B} étant < F_{A}.

7. Procédé selon la revendication 5 ou 6, **caractérisé en ce que** l'intervalle de soudage est plus court que l'intervalle d'usinage (I).

8. Procédé selon l'une quelconque des revendications 5 à 7, **caractérisé en ce que** l'intervalle de soudage se situe à l'intérieur de l'intervalle d'usinage (I), l'intervalle d'usinage (1) commençant avant l'intervalle de soudage et l'intervalle de soudage se terminant de manière préférée avant l'intervalle d'usinage (I).

9. Procédé selon l'une quelconque des revendications 1 à 6, **caractérisé en ce qu'**entre l'intervalle de déplacement (II) et l'intervalle d'usinage (I) est prévu un intervalle de progression (III) au cours duquel l'amplitude d'oscillation de l'oscillation ultrasonique de la sonotrode (2) est augmentée en continu ou en plusieurs étapes pour passer de l'amplitude d'oscillation B à l'amplitude d'oscillation A.

10. Procédé selon la revendication 9, **caractérisé en ce que** la bande de matériau (1) est déplacée entre la sonotrode (2) et le contre-outil (3) à une vitesse de bande v constante pendant l'intervalle d'usinage (I), l'intervalle de déplacement (II) et l'intervalle de progression (III), la longueur de l'intervalle de progression (III) étant choisie de sorte qu'une longueur comprise entre 0,5 cm et 10 cm, de manière préférée comprise entre 1 et 5 cm, de la bande de matériau (1) soit déplacée entre la sonotrode (2) et le contre-outil (3) pendant l'intervalle de progression (III).
